Europäisches Patentamt

European Patent Office

Office européen des brevets

(19)

(11) Veröffentlichungsnummer: **0 159 645**
**B1**

(12) **EUROPÄISCHE PATENTSCHRIFT**

(45) Veröffentlichungstag der Patentschrifft:
17.01.90

(21) Anmeldenummer: 85104532.8

(22) Anmeldetag: 15.04.85

(51) Int. Cl. ⁴: **B 65 D 5/42**, G 11 B 23/023

(54) Herstellung einer Faltschachtel mit Fenster für Magnetbandcassetten.

(30) Priorität: 27.04.84 DE 3415690

(43) Veröffentlichungstag der Anmeldung:
30.10.85 Patentblatt 85/44

(45) Bekanntmachung des Hinweises auf die Patenterteilung:
17.01.90 Patentblatt 90/03

㊱ Bennante Vertragsstaaten:
DE FR IT NL

(56) Entgegenhaltungen:
DE-A-3 047 056
DE-A-3 313 964
DE-C-3 200 306
FR-A-1 552 616

(73) Patentinhaber: Agfa-Gevaert AG

D-5090 Leverkusen 1 (DE)

(72) Erfinder: Thiele, Hartmut
Herterichstrasse 83
D-8000 Muenchen 71 (DE)

LIBERGRAF, STOCKHOLM 1990

## Beschreibung

Die Erfindung betrifft die Herstellung einer einseitig offenen, mit Fenster versehenen Faltschachtel aus Karton zum Einschieben einer Magnetbandcassette, insbesondere einer Videocassette.

Aus der DE-AS-3 047 056 ist eine einseitig offene Faltschachtel aus Karton bekannt, die aus zwei doppelwandigen Seiten- und Stirnwänden sowie aus einem Rücken besteht, an dem beiderseitig über Faltlinien je eine Außen- und Innenlage zur Bildung der Seitenwände angelenkt ist, wobei an den Außen- und Innenlagen Lappen zur Bildung der Stirnwände vorgesehen sind. Im nicht aufgerichteten Zustand (flachliegender Kartonzuschnitt liegen Außen- und Innenlagen sowie Rücken in einer Linie hintereinander.

Aus der DE-PS-3 200 306 ist ein doppelwandiger Cassettenbehälter für Videocassetten bekannt, bei dem eine Außenlage einen Fensterausschnitt enthält, in dem nach der Faltung ein in der Innenlage vorgesehenes bedruckbares Feld erkennbar wird.

Um eine Videobandcassette oder deren Etikett in ihrem Behälter sichtbar zu machen, werden verschiedentlich diese mit Fenster ausgestattet. Vor allem bei Behältern aus Kunststoff werden in die Fensteraussparung Fenster aus dem gleichen Kunststoff wie der Behälter eingesetzt und beispielsweise mit Ultraschall verschweißt. So wird in der DE-OS-3 313 964 ein Behälter mit Sichtfenster beschrieben, das aus einer mehrfach laminierten Folie besteht wodurch eine bessere Haftung an dem Kunststoffgehäuse erzielt werden soll. Außerdem liegt der eigentliche Sichtbereich des Fensters durch Ausbildung einer Stufe tiefer als die innere Oberfläche des Behälters, um beim Einstecken der Cassette eine Beschädigung des Fensters zu vermeiden. Der Aufwand für die Herstellung des Fensters ist relativ hoch, was die Kosten des Behälters entsprechend erhöht. Aufgabe der Erfindung ist es daher, einen Cassettenbehälter mit Fenster herzustellen, der keine kaschierte Folie erforderlich macht, um eine ausreichende Haftung am Cassettenbehälter zu erhalten, und der mit demselben Verbindungsmedium wie dem des Behälters befestigbar ist, wobei die Wahl des Kunststoffmaterials für das Fenster nicht von Bedeutung ist.

Dieses Ziel wird erfindungsgemäß erreicht durch die Herstellung einer einseitig offenen Faltschachtel der genannten gattungsgemäßen Art (vgl. DE-A-3 313 964) mit den im kennzeichnenden Teil des Anspruchs 1 genannten Merkmalen.

Details der Erfindung sind aus der Beschreibung und den Unteransprüchen zu entnehmen.

Im Nachstehenden wird die Erfindung anhand von Zeichnungen näher erläutert und zwar zeigen

Figur 1 ein Schaubild eines Behälters mit einem Fenster

Figur 2 ein Schaubild eines Behälters mit zwei Fenstern

Figur 3 ein Schaubild eines Behälters mit einem bis in die Stirnwand hineinreichenden Fenster

Figur 4 ein Schaubild eines Behälters mit einem von der Stirnwand bis in den Rücken hineinreichenden Fenster

Figur 5 eine Ansicht eines aufgefalteten Behälters mit Fenster.

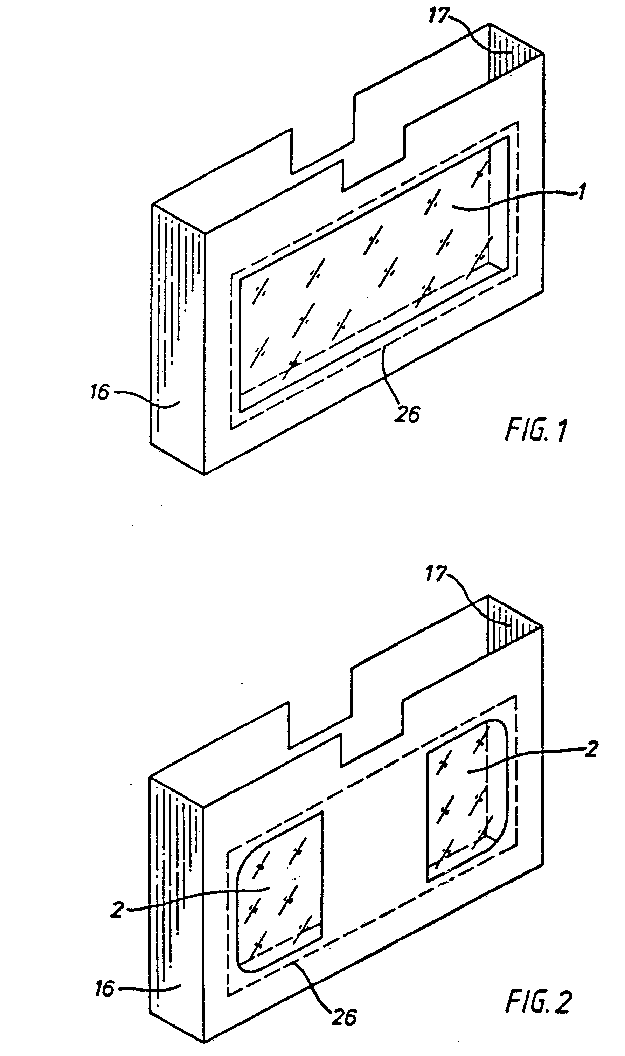

Die vorliegende Erfindung wird andhand einer Faltschachtel für eine Videocassette, wie sie teilweise zum Beispiel in DE-OS-3 047 056 beschrieben ist, näher erläutert. Die Schaubilder Figur 1 bis 4 sollen vorab zeigen, welche Formen von Fenstern möglich sind. In der einfachsten Form ist das Fenster 1 im Zentrum der Seitenwand angeordnet, so daß das Etikett der Cassette mit seinen Angaben sichtbar wird. Das Schaubild 2 zeigt zwei teilweise abgerundete planparallel angeordnete Fenster 2, die sich mit dem Fenster einer Cassette eines bekannten Videosystems decken.

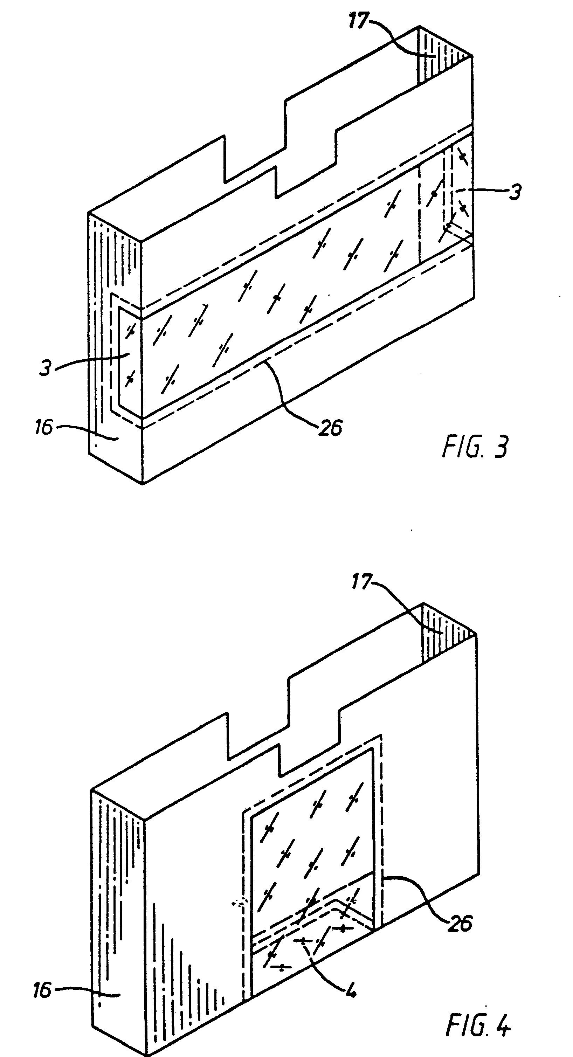

Durch die Fenster hindurch werden die Bandspulen der Kassette sichtbar. Ist das Fenster 3 breit bis in die Stirnwände hinein verlängert (Fig. 3) kann man gegebenenfalls auf der Kassettenschmalseite angebrachte Kenndaten erkennen. Nach Fig. 4 ist es auch möglich, das Sichtfenster 4 von einer Seitenwand bis in den Rücken 5 hineinzuziehen. Wenn der Behälter im Archiv steht, kann man erkennen, ob er eine Kassette enthält, oder nicht. Die Möglichkeiten Fenster am Behälter anzubringen, sind so vielfältig und einfach, wie sie bei kaum einem anderen Behältertyp ausführbar sind.

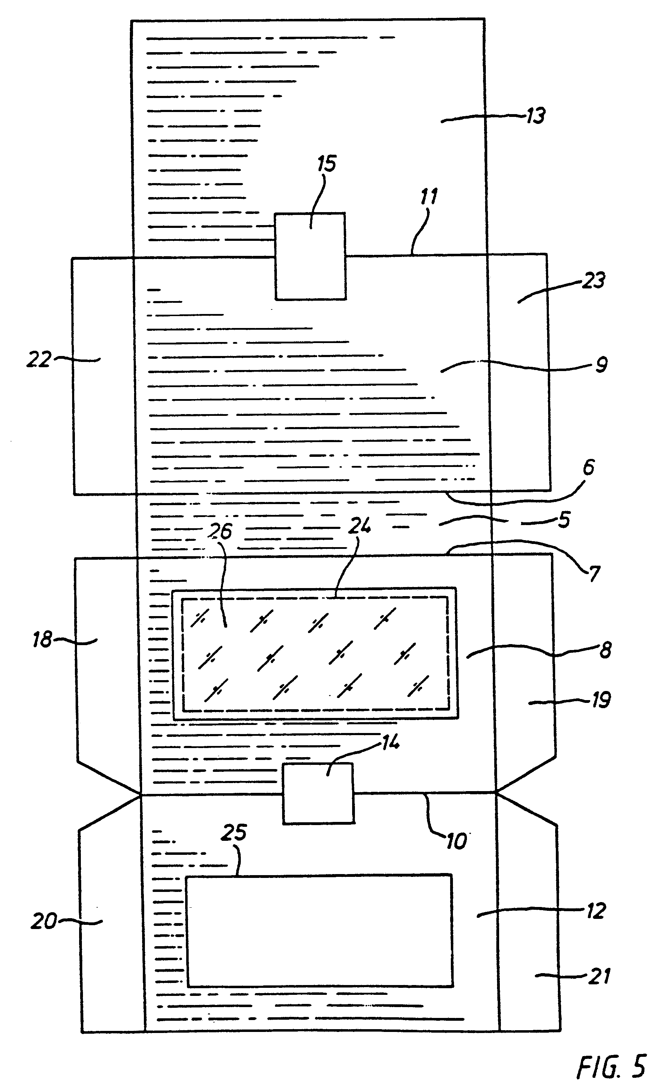

Die einseitig offene Faltschachtel wird aus einem Kartonzuschnitt gemäß Fig. 5 durch Falten hergestellt. Der aufgefaltete Behälter weist einen Rücken 5 auf, an den zu beiden Seiten über je eine Faltlinie 6, 7 eine Außenlage 8, 9 und an jeder Außenlage über je eine weitere Faltlinie 10, 11 eine Innenlage 12, 13 angelenkt ist. Die Faltlinien 10, 11 können noch durch eine Aussparung 14, 15 in an sich bekannter Weise unterbrochen sein, die als Grifflöcher zur Entnahme der Kassette dienen. Die Stirnwände 16, 17 werden durch Lappen 18 - 23 an den Außenlagen bzw. Innenlagen gebildet. Erfindungsgemäß enthalten mindestens die benachbarten Innen- und Außenlagen 8, 12 bzw. 9, 13 je eine rechteckige Fensteraussparung 24, 25. Diese können auch auf beiden Seitenwänden sein oder auch eine andere Form haben, wie die Schaubilder gemäß Fig. 2 bis 4 zeigen. Vor dem Aufrichten des Kartonzuschnittes dessen Innenflächen mit siegelbarem Klebstoff beschichtet sind, wird auf die Innenseite der Fensteraussparung 24 der Außenlage 8 eine transparente Folie 26, die auch eingefärbt sein kann, aufgelegt. Das Material der Kunststoffolie ist z. B. Polyethylenterephthalat, Polypropylen, Polyvinylacetat oder Zellglas und hat eine Stärke von 80 bis 200 µm. Die Folie wird gegen Verrutschen gesichert z. B. durch punktförmiges Anwärmen an einer Ecke. Die Folie soll ferner mindestens 10 µm über den Rand der Fensteraussparung hinausreichen um eine ausreichende Planlage zu gewährleisten. Beim Aufrichten Planlage zu gewährleisten. Beim Aufrichten kommt die Folie zwischen Innenlage und Außenlage zu liegen, und wird ohne Mehraufwand in einem Siegelautomaten zusammen mit den Lagen und mit dem gleichen Medium z. B. den genannten siegelbaren Klebstoff verschweißt. Sollen zwei Fenster auf dem Etui erscheinen, wie im Falle des Schaubildes Fig. 2 wird auch nur ein einziges Folienstück entsprechender Länge verwendet. Bei einer Fensterform gemäß Schaubild Fig. 3 und 4 wird die Folie am Übergang von der Seitenwand zur Stirnwand bzw. zum Rücken vorgeformt bzw. vorgebrochen, um eine einwandfreie Verarbeitung in dem Siegelautomaten zu erreichen. Da in allen Fällen die Folie zwischen den Außen- und Innenlagen bzw. auch zwischen den Stirnlagen liegt, wird eine Beschädigung der Oberfläche der Folie oder beim Einschieben der Kassette in den Behälter vermieden. Bei Verwendung einer doppelwandigen Faltschachtel wird also in einfacher Weise und ohne Mehraufwand mit Ausnahme der Folie selbst ein Behälter mit den verschiedensten Fenster formen erhältlich.

## Patentansprüche

1. Herstellung einer einseitig offenen Faltschachtel aus Karton oder dergleichen zum Einschieben einer Magnetbandcassette bestehend aus zwei doppelwandigen Seiten- und Stirnwänden sowie einem Rücken (5), an dem zu beiden Seiten über Faltlinien (6, 7, 10, 11) je eine Außen- (8, 9) und Innenlage (12, 13) angelenkt ist zur Bildung der Seitenwände und an den Außen- und/oder Innenlagen Lappen zur Bildung der Stirnwände (16, 17) vorgesehen sind, wobei im flachliegenden Faltschachtelzuschnitt Außen- und Innenlagen sowie Rücken in einer Linie hintereinander liegen, und wobei die Innenlagen mit einem siegelbaren Klebstoff beschichtet sind, dadurch gekennzeichnet, daß mindestens die Innen- (12) und Außenlage (8) einer Seitenwand sich überdeckende Aussparungen (24, 25) zur Bildung eines Fensterausschnittes aufweisen, zwischen denen sich eine transparente Kunststoffolie (26) befindet, welche durch punktweises Anschweißen an einer Ecke gegen Verrutschen gesichert und beim Aufrichten der Faltschachtel zwischen Außen- und Innenlage mit dem Klebstoff eingeschweißt wird.

2. Herstellung einer Faltschachtel nach Anspruch 1, dadurch gekennzeichnet, daß die Kunststoffolie aus Polyethylenterephthalat, Polyolefin, Polyvinylacetat oder Zellglas besteht.

3. Herstellung einer Faltschachtel nach Anspruch 1, dadurch gekennzeichnet, daß zwei planparallel angeordnete Fenster (2) auf einer Seitenwand angeordnet sind, die sich mit den Fenstern einer Videocassette überdecken.

4. Herstellung einer Faltschachtel nach Anspruch 1, dadurch gekennzeichnet, daß das Fenster beziehungsweise die Fensteraussparungen über die Länge der Seitenwand bis in die Stirnwände (3) hineinreicht.

5. Herstellung einer Faltschachtel nach Anspruch 1, dadurch gekennzeichnet, daß das Fenster beziehungsweise die Fensteraussparung von einer Seitenwand bis in den Rücken (4) hineinreicht.

## Claims

1. Production of a folded box which is open on one side and is made of cardboard or the like and into which a magnetic tape cassette is inserted, consisting of two double-walled side and end walls and a back (5), on to each of the two sides of which one outer (8, 9) and one inner layer (12, 13) is hinged via folding lines (6, 7, 10, 11) for the formation of the side walls and flaps are provided on the outer and/or inner layers for the formation of the end walls (16, 17), wherein the outer and inner layers and the back are arranged one behind the other in a line in the flat blank of the folded box, and wherein the inner layers are coated with a sealable adhesive, characterised in that at least the inner (12) and outer layers (8) of one side wall have coinciding cutouts (24, 25) for the formation of a window opening, between which cutouts a transparent plastic film (26) is arranged which is prevented from slipping by being spot-welded in one corner and is welded between the outer and inner layer with the adhesive during the erection of the folded box.

2. Production of a folded box according to Claim 1, characterised in that the plastic film consists of polyethylene terephthalate, polyolefin, polyvinyl acetate or cellophane.

3. Production of a folded box according to Claim 1, characterised in that two windows (2) arranged in a plane parallel manner are located on one side wall which coincide with the windows of a video cassette.

4. Production of a folded box according to Claim 1, characterised in that the window or the window openings extend over the length of the side wall and into the end walls (3).

5. Production of a folded box according to Claim 1, characterised in that the window or the window opening extends from one side wall into the back (4).

## Revendications

1. Fabrication d'une boîte pliable ouverte d'un côté, cette boîte étant constituée de carton ou d'une matière analogue, destinée à l'insertion d'une cassette à ruban magnétique, cette boîte comprenant deux parois latérales et frontales à double épaisseur, ainsi qu'une partie dorsale (5), à laquelle sont articulées, des deux côtés, via des lignes de pliage (6, 7, 10, 11), chaque fois, une couche externe (8, 9) et une couche interne (12, 13), pour former les parois latérales, tandis que, contre les couches internes ou externes, on a disposé des pattes pour la formation des parois frontales (16, 17), les couches externes et internes ainsi que la partie dorsale se trouvant disposées en alignement, les unes derrière les autres, lorsque la découpe pour la boîte pliable se trouve disposée à plat, tandis que les couches internes sont enduites d'une colle pour scellage, caractérisée en ce qu'au moins la couche interne (12) et la couche externe (8) d'une paroi latérale sont munies d'évidements (24, 25) coïncidant les uns avec les autres, en vue de former une découpe de fenêtre, couches entre lesquelles se trouve une feuille mince (26) transparente en matière synthétique, celle-ci étant garantie contre le déplacement par un soudage ponctuel en un coin, et étant soudée avec la colle entre les couches externes et internes, lors du montage de la boîte pliable.

2. Fabrication d'une boîte pliable selon la revendication 1, caractérisée en ce que la feuille mince en matière synthétique est constituée de téréphtalate de polyéthylène, de polyoléfine, d'acétate de polyvinyle ou d'une pellicule cellulosique transparente.

3. Fabrication d'une boîte pliable selon la revendication 1, caractérisée en ce que deux fenêtres (2) à faces planes et parallèles sont aménagées sur une paroi latérale, ces fenêtres coïncidant avec les fenêtres d'une vidéocassette.

4. Fabrication d'une boîte pliable selon la revendication 1, caractérisée en ce que la fenêtre ou les évidements pour fenêtres se prolongent au-delà de la longueur de la paroi latérale jusque dans les parois frontales (3).

5. Fabrication d'une boîte pliable selon la revendication 1, caractérisée en ce que la fenêtre ou l'évidement pour fenêtre se prolonge depuis une paroi latérale jusque dans la partie dorsale (4).

*FIG. 1*

*FIG. 2*

FIG. 3

FIG. 4

FIG. 5